(19) Europäisches Patentamt
European Patent Office
Office européen des brevets

(11) **EP 2 866 432 B1**

(12) **EUROPEAN PATENT SPECIFICATION**

(45) Date of publication and mention
of the grant of the patent:
**04.01.2017 Bulletin 2017/01**

(51) Int Cl.:
***H04N 5/232*** *(2006.01)*     ***H04N 5/243*** *(2006.01)*

(21) Application number: **12826594.9**

(86) International application number:
**PCT/JP2012/065678**

(22) Date of filing: **20.06.2012**

(87) International publication number:
**WO 2013/190645 (27.12.2013 Gazette 2013/52)**

(54) **AUTOMATIC IMAGE COMPOSITING DEVICE**

VORRICHTUNG FÜR AUTOMATISCHE BILDZUSAMMENSETZUNG

DISPOSITIF DE COMPOSITION AUTOMATIQUE D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.04.2015 Bulletin 2015/18**

(73) Proprietor: **Hitachi, Ltd.**
**Tokyo 100-8280 (JP)**

(72) Inventors:
• **NAKASUGI, Takashi**
**Tokyo 100-8220 (JP)**
• **MORIOKA, Takayuki**
**Tokyo 100-8220 (JP)**
• **IKESHOJI, Nobuo**
**Tokyo 100-8220 (JP)**

(74) Representative: **Moore, Graeme Patrick et al**
**Mewburn Ellis LLP**
**City Tower**
**40 Basinghall Street**
**London EC2V 5DE (GB)**

(56) References cited:
**GB-A- 2 356 996         JP-A- 2001 268 323
JP-A- 2007 280 102     US-A1- 2008 246 777
US-A1- 2010 047 001**

Remarks:
The file contains technical information submitted after the application was filed and not included in this specification

**Description**

TECHNICAL FIELD

The present invention relates to a technique simply combining a plurality of images.

BACKGROUND ART

For acquiring an image with proper gloss and shade, such a technique has hitherto been known to combine images with lighting applied from various angles into a single image.

Patent Document1 describes that a subject is shot from a plurality of angles to combine images based on the quantity of light.

GB1256996 discloses an improved digital camera. US2008/0246777 discloses a method and apparatus for background replacement in still photographs.

US2010/0047001 discloses a multi-function device architecture.

REFERANCE ART DOCUMENT

PATENT DOCUMENT

Patent Document 1: Japanese Patent Application Laid-Open Publication No. 2007-280102

SUMMARY OF INVENTION

PROBLEM TO BE SOLVED BY THE INVENTION

In Patent Document 1, the quantity of light illuminating the subject needs to be specified for combining. Though simplified for acquiring a combined image, it still needs to control the quantity of light depending on the subject.

An object of the present invention is to simply acquire a combined image through automatic determination of the proportion of combination without relying on the manual control of the quantity of light, etc. as in Patent Document 1.

MEANS FOR SOLVING PROBLEM

In order to solve the above problem, the present invention provides an automatic image combining apparatus which includes an input unit arranged to receive a first image obtained by shooting a subject with light applied thereto, from a first lighting device, in an oblique direction, the input unit being arranged to receive a second image obtained by shooting the subject with light applied thereto, from a second lighting device, in an opposite oblique direction, and the input unit being arranged to accept information on the subject and a shooting device; a blend pattern generating unit arranged to calculate and find, based on the accepted information, a ratio Z for determining a proportion in combining of the first image and the second image for each pixel whereby the blend pattern generating unit calculates a point b at which an angle of incidence of light from the first lighting device to the subject is equal to an angle of reflection of light from the subject to the shooting device and a point c at which an angle of incidence of light from the second lighting device to the subject is equal to an angle of reflection of light from the subject to the shooting device, the ratio Z allowing a gradual transition from the first image to the second image from b toward c; an image blending unit arranged to obtain a third image combined by adding the first image multiplied by the ratio Z and the second image multiplied by 1-Z for each pixel; and an output unit arranged to output the third image.

EFFECTS OF INVENTION

According to the present invention, images can be simply combined.

BRIEF DESCRIPTION OF DRAWINGS

Fig. 1 is an exemplary configuration diagram of a shooting system of a first embodiment;
Fig. 2 is an exemplary shooting arrangement diagram of the shooting system of the first embodiment;
Fig. 3 shows, by way of example, a blend pattern and a shooting arrangement of the shooting system of the first

**EP 2 866 432 B1**

embodiment;
Fig. 4 shows examples of shot images and a completed image of the shooting system of the first embodiment;
Fig. 5 shows examples of blend patterns and shot images of a second embodiment;
Fig. 6 shows an exemplary display image layout of an image selecting unit of the second embodiment; and
Fig. 7 shows examples of completed images of the second embodiment.

EMBODIMENTS FOR CARRYING OUT THE INVENTION

Embodiments will now be described with reference to the drawings.

First Embodiment

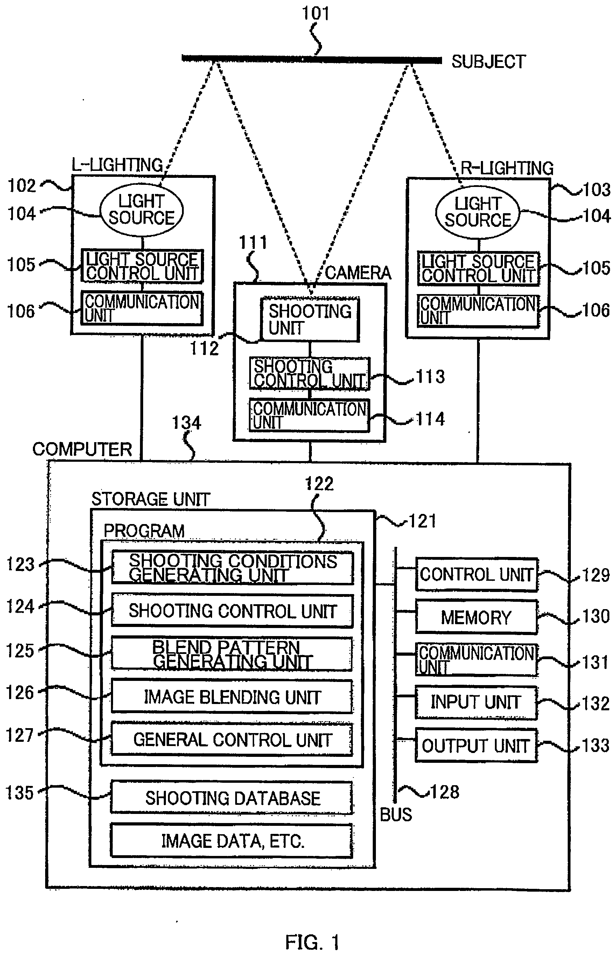

Fig. 1 shows a configuration of a shooting system of this embodiment. The image shooting system shown in Fig. 1 is a computer system enabling easy acquisition of shooting data without reflection of light sources resulting from regular reflection, even in the case of a subject having a glossy surface.

An L-lighting 102 and an R-lighting 103 have a function to turn on a light source 104 in response to a turn-on command received from a computer 134 via a communication unit 106 by the action of a light source control unit 105 and turn off the light source 104 in response to a turn-off command. The L-lighting 102 and the R-lighting 103 are disposed obliquely and oppositely obliquely, respectively, with respect to a subject.

A camera 111 includes a shooting unit 112, a shooting control unit 113, and a communication unit 114. The shooting control unit 113 has a function to form an image of the subject on an image pickup device of the shooting unit 112 through a lens of the shooting unit 112 in response to a shooting command received from the computer 134 via the communication unit 114, to convert the image into digital data by the image pickup device, for the storage in a temporary memory of the shooting unit 112. The shooting control unit 113 further has a function to convert image data stored in the temporary memory of the shooting unit 112 into a common image file format (JPEG format, TIFF format, etc.) in response to a transfer command received from the computer 134 via the communication unit 114, and to transfer the image data to the computer 134.

The computer 134 includes a storage unit 121, a control unit 129 (CPU), a memory 130, a communication unit 131, an input unit 132, and an output unit 133, which are coupled together via a bus 128.

The computer 134 reads a program 122 stored in the storage unit 121 such as a hard disk drive into the memory 130 and executes the program by the control unit 129. The computer 134 is provided with the input unit 132 such as various types of keyboards and mice and the output unit 133 such as a display, commonly included in a computer apparatus. The input unit may input external data. The input unit may read data from a storage medium or may directly read data transmitted via a network. Similarly, the output unit is not limited to the display and may be any one capable of outputting image data processed. The output unit may be one that performs writing to the storage medium or may be one that provides data as its output.

The computer 134 has the communication unit 131 transmitting data to and receiving data from other devices and is coupled to the camera 111, the L-lighting 102, and the R-lighting 103 to perform data communications therewith.

As shown in Table 1 which follows, a shooting database 135 is a database that stores a storage position of shot image data, a storage position of a shooting conditions data file, etc.

[Table 1]

| Shooting Database 135 | |
| --- | --- |
| ID | FILE STORAGE POSITION |
| 1 | Storage position of shooting conditions data file |
| 2 | Storage position of L-image data |
| 3 | Storage position of R-image data |
| 4 | Storage position of completed image data |

The positions in the diagram of a subject 101 that is an object to be shot such as a painting, the L-lighting 102, the R-lighting 103, and the camera 111 represent a positional relationship viewed from the top at a shooting location. The L-lighting 102, the R-lighting 103, and the camera 111 are each coupled to the computer 134 so that they can perform data communications with the computer 134 by the performance of the communication units 106 and the communication unit 114. Available as communication means are various networks such as a LAN and WAN or transmission lines such as a USB.

Functions of the program 122 of the computer 134 will then be described. A shooting conditions generating unit 123 has a function to store, as shooting conditions data into the storage unit 121, the distance between the camera 111 and the subject 101, the shooting range of the camera 111, the position of the L-lighting, and the position of the R-lighting.

A shooting control unit 124 has a function to firstly store into the storage unit 121 L-image data that is camera shooting data with the L-lighting 102 turned on and with the R-lighting 103 turned off and to secondly store into the storage unit 121 R-image data that camera shooting data with the R-lighting 103 turned on and with the L-lighting 102 turned off.

A blend pattern generating unit 125 has a function to create a blend pattern depending on the contents of the shooting conditions data, and to store the blend pattern into the storage unit 121.

An image blending unit 126 combines the L-image data and the R-image data depending on the contents of the blend pattern, to generate completed image data for the storage into the storage unit 121.

A general control unit 127 operates the shooting conditions generating unit 123 in response to a user command, then operates the shooting control unit 124, then operates the blend pattern generating unit 125, and lastly operates the image blending unit 126. Although in this embodiment the blend patterns are automatically generated from the shooting conditions data, this is not limitative, but the user may directly determine and input the blend patterns or initially determined blend patterns may be stored.

<Execution Procedure for Shooting>

An execution procedure of a shooting method according to this embodiment will be described with reference to the drawings. Various performances corresponding to an image shooting method set forth hereinbelow are implemented by the program 122 that is read into the memory 130 of the computer 134 for execution. This program 122 is composed of codes for performing various actions which will hereinafter be described.

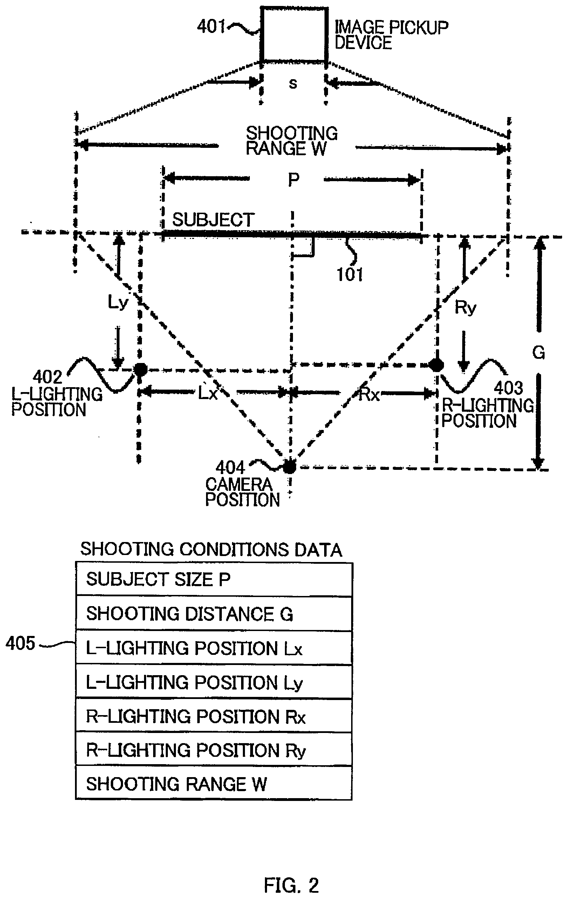

Performance of the shooting conditions generating unit 123 will first be described. Fig. 2 is a top plan view representing a positional relationship among constituent elements at a shooting location.

The shooting conditions generating unit 123 first accepts from the input unit a subject size P representative of a horizontal width of the subject, a focal length f of a lens mounted on the camera 111, and a width s of an image pickup device 401 within the camera 111.

A shooting range W is then found using Equation 1 and a shooting distance G representative of the length of a line joining the disposition position of the camera 111 and the center of the subject 101 is found using Equation 2.

$$\text{(Eq.1)} \quad W = 1.2 \cdot P$$

$$\text{(Eq.2)} \quad G = W \cdot f / s + f$$

The shooting distance G is then notified via the output unit 133 to the user. The user sets the camera 111 at a camera position 404 where the line joining the center of the subject 101 and the disposition position of the camera 111 is orthogonal to the subject 101 and where the length of the line joining the camera 111 and the center of the subject 101 is equal to the shooting distance G. Although in this embodiment the shooting range W is set using Equation 1, other equations may be used as long as $W \geqq P$ is achieved.

The user may be able to change the coefficient 1.2 by which P is multiplied. Since a larger coefficient by which P is multiplied brings about a wider shooting range W, it is advantageous in that the disposition allowable error in the camera position increases but is disadvantageous in that the resolution falls due to a reduced proportion of the subject size P to the shooting range W.

The user then points the shooting direction of the camera 111 toward the center of the subject 101, places the L-lighting 102 on the left side of a line joining the camera 111 and the center of the subject 101, and places the R-lighting 103 on the right side of the line joining the camera 111 and the center of the subject 101.

The shooting conditions generating unit 123 then accepts from the user, via the input unit, an L-lighting position Lx and an L-lighting position Ly that indicate the position of the L-lighting 102 and an R-lighting position Rx and an R-lighting position Ry that indicate the position of the R-lighting 103. The values represent the lengths shown in the arrangement diagram of Fig. 2. As used herein, the camera position 404 refers to the position of a principal point of the lens mounted on the camera 111.

Shooting conditions data is stored as a file in the storage unit 121, the shooting conditions data including the subject size P, the shooting distance G, the L-lighting position Lx, the L-lighting position Ly, the R-lighting position Rx, the R-lighting position Ry, and the shooting range W. The storage position of the shooting conditions data file is recorded in a row ID=1 of the shooting database 135.

Although this embodiment shows a method in which the focal length f and the width s of the image pickup device are input by the user, they may be previously stored as values proper to the camera in the storage unit 121 of the computer 134 so that the values can be read out for use. Alternatively, use may be made of values written to a predetermined portion of an L-image data file or an R-image data file.

Although this embodiment shows a method in which the shooting distance G is found by calculation, another method may be employed in which the user adjusts the position of the camera while squinting into a viewfinder fitted to the camera 111 so that the camera 111 lies at a position where the subject falls within the shooting range, after which the user inputs the shooting distance G and the shooting range W at that time. In this case, the user may acquire the shooting range by reading a value of a scale, etc., from an image shot with the scale placed at the same position as the subject 101 or may acquire the shooting range from the focal length and the width of the image pickup device by calculation using Equation 2.

Although Equation 2 is obtained by using a general lens formula, the calculation equation is not limited to this equation, but other equations are available. The other equations encompass, by way of example, a pinhole camera model based equation and an equation created based on actual measurements of the shooting distance and the shooting range.

Performance of the shooting control unit 124 will then be described in sequential order.

The shooting control unit 124 first transmits a turn-on command to the L-lighting 102 and transmits a turn-off command to the R-lighting 103. These commands allow only the left-hand lighting to turn on. The shooting control unit 124 then transmits a shooting command to the camera 111. The camera 111 writes image data shot in response to the shooting command into the temporary memory of the shooting unit 112.

The shooting control unit 124 transmits a transfer command to the camera 111. In response to the transfer command, the camera 111 converts the contents of the temporary memory into a common image file format for the transfer to the computer 134. The shooting control unit 124 stores shot image data transferred from the camera 111 as L-image data into the storage unit 121 and records the storage position of the L-image data in a row ID=2 of the shooting database 135.

The shooting control unit 124 transmits a turn-on command to the R-lighting 103 and transmits a turn-off command to the L-lighting 102. These commands allow only the right-hand lighting to turn on. The shooting control unit 124 then transmits a shooting command to the camera 111. In response to the shooting command, the camera 111 writes shot image data into the temporary memory of the shooting unit.

The shooting control unit 124 transmits a transfer command to the camera 111. In response to the transfer command, the camera 111 converts the contents of the temporary memory into a common image file format for the transfer to the computer 134. The shooting control unit 124 stores shot image data transferred from the camera 111 as R-image data into the storage unit 121 and records the storage position of the R-image data in a row ID=3 of the shooting database 135.

In this manner, the actions of the shooting control unit 124 allow the storage into the storage unit 121 of the L-image data that is an image obtained when the left-hand lighting turns on and of the R-image data that is an image obtained when the right-hand lighting turns on.

Performance of the blend pattern generating unit 125 will then be described.

A horizontal pixel count H of image data is first obtained. Due to the use of a common image file format such as JPEG or TIFF in this embodiment, H is obtained by reading a numerical value indicative of the horizontal width written to the file at a predetermined position.

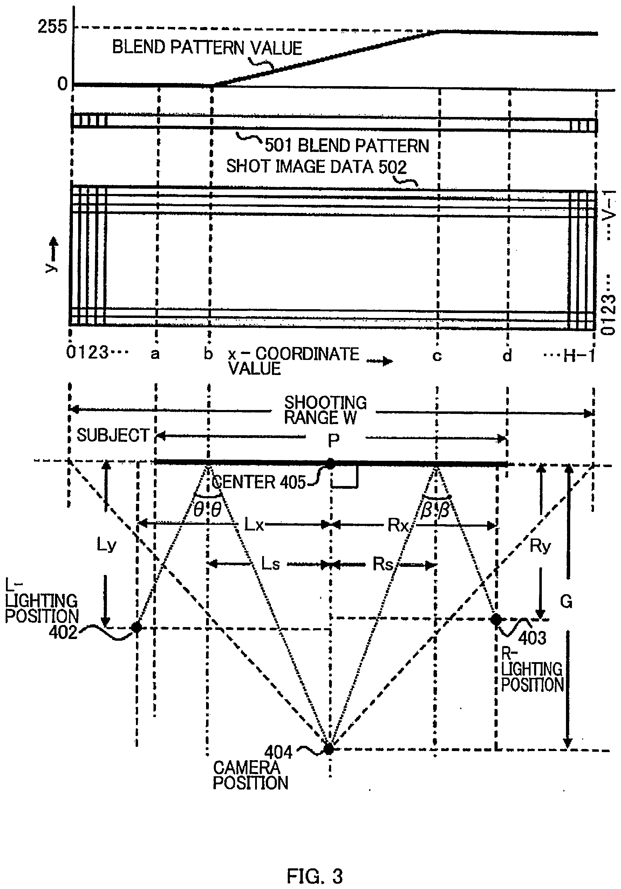

Coordinate values b and c are obtained using the following method. The coordinate values b and c represent a point where the angle of incidence of light from a lighting becomes equal to the angle of reflection to a shooting device. Fig. 3 is an explanatory view of a relationship between blend patterns and shot image data, with a top view of the shooting environment. Shot image data 502 consists of 8-bit positive integer values representing the pixel brightness, indicated by an abscissa value x and an ordinate value y. Although the case of 8 bits is described herein, this is not limitative, but 16 bits or 32 bits are also available.

The abscissa value x is a numerical value from 0 to H-1 and the ordinate value y is a numerical value from 0 to V-1. Similar to the case of H, the value of V is obtained by reading a numerical value indicative of the vertical width written to the file at a predetermined position. Although in a common color image a plurality of values such as R, G, and B are present for a single coordinate, one representative type will be described in this embodiment for the purpose of avoiding the complication.

A blend pattern 501 is reserved in the memory 130 as an area for storing a blend pattern. The contents of the blend pattern 501 are H numerical values to associate an 8-bit positive integer value with the abscissa value x of the shot image data. An L-lighting position 402 represents a position at which the L-lighting 102 is placed and an R-lighting position 403 represents a position at which the R-lighting 103 is placed. A center 405 represents a center position of the subject 101.

A method of generating the blend pattern 501 will be described. A position is first found at which light issued from the L-lighting 102 undergoes regular reflection. The regular reflection occurs at a position on the subject surface where the angle of incidence from the light source coincides with the angle of reflection toward the camera 111. Accordingly, a distance Ls between the regular reflection position of the L-lighting 102 and the center is expressed from Fig. 3 as

$$\text{(Eq.3)} \quad \text{Ls=G·tan}(\theta) \quad \text{(where } 0 \leqq \theta \leqq 90)$$

$$\text{(Eq.4)} \quad \theta = \text{tan}^{-1}(\text{Lx}/(\text{G+Ly}))$$

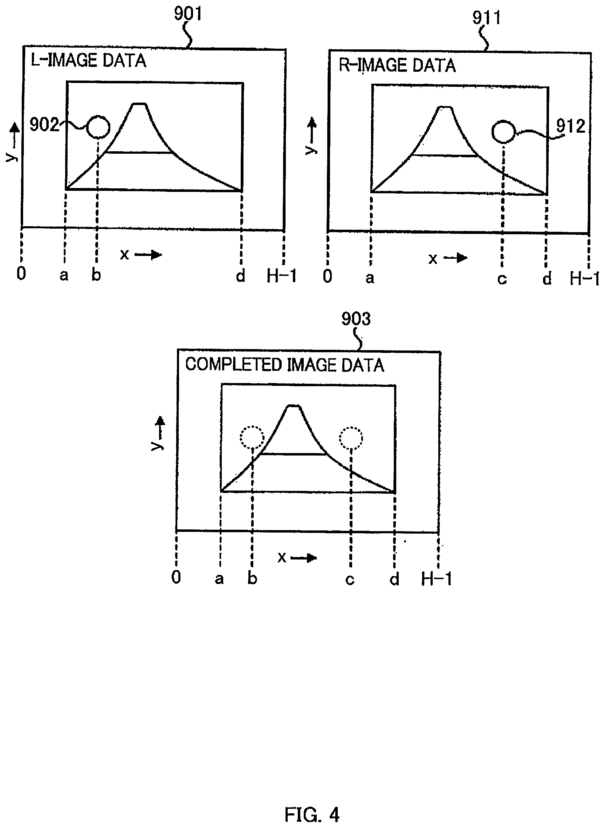

Fig. 4 is easily obtained by extending a line joining the camera position 404 and the regular reflection position on the subject. An x-coordinate value b of the blend pattern corresponding to the regular reflection position of the L-lighting 102 can be obtained by associating the shooting range W with the horizontal pixel count H from the following equation.

$$\text{(Eq.5)} \quad \text{b=(W/2-Ls)·(H/W)} \quad \text{(where round up the first}$$

$$\text{decimal place)}$$

In the same manner, a distance Rs between the regular reflection position of the R-lighting 103 and the center can be obtained from the following equations.

$$\text{(Eq.6)} \quad \text{Rs=G·tan}(\beta)$$

$$\text{(Eq.7)} \quad \beta = \text{tan}^{-1}(\text{Rx}/(\text{G+Ry}))$$

An x-coordinate value c of the blend pattern corresponding to the regular reflection position of the R-lighting 103 can be obtained by associating the shooting range W with the horizontal pixel count H from the following equation.

$$\text{(Eq.8)} \quad \text{c=(W/2+Rs)·(H/W)} \quad \text{(where round down the first}$$

$$\text{decimal place)}$$

The blend pattern generating unit 125 generates a blend pattern by use of the x-coordinate values b and c as follows.

In $0 \leqq x \leqq b$, all the values are set to 0. In b<x<c, the value is gradually incremented from 0 to 255 and hence the value of z expressed by the following equation is set. Note that 0 is set if z<0 and that 255 is set if z>255. In $c \leqq x \leqq H-1$, all the values are set to 255.

$$\text{(Eq.9)} \quad \text{z=255·(x-b)/(c-b)}$$

By setting the value in this manner, the blend pattern has the value shown in the graph of Fig. 3. Although multiplied by 255 due to 8-bit 256-gradation pixel herein, this is not limitative, but z=(x-b)/(c-b) may be employed without being multiplied by the gradation value. In that case, the expression of Eq. 11 also uses 1 instead of 255, which will be described later.

When generating the blend pattern, the blend pattern value in b<x<c may be set so as to increase according as x varies from b to c and the method thereof is not limited to the method shown in this embodiment. For example, the following equation may be employed. The equation is not limitative but any equation is available as long as it can define which proportion of two images becomes larger in gradually variable manner.

$$(Eq.10) \quad z=255 \cdot (1-\cos(\pi(x-b)/(c-b)))/2$$

Use of Equation 10 brings about an effect that the blend boundary (near b and c) has a smoother variation, as compared with the use of Equation 9.

The generated blend pattern is stored in the storage unit. Performance of the image blending unit 126 will then be described. Fig. 4 shows diagrams depicting the contents of image data. Table 2 shows corresponding relationships between the array and values of pixels of the L-image data area, R-image data area, and blend pattern written into the memory 130 and of the completed image data area formed through combining.

[Table 2]

| L-Image Data Area 1901 | | | |
|---|---|---|---|
| L(0, V-1) | L(1, V-1) | ... | L(H-1, V-1) |
| ... | ... | ... | ... |
| L(0, 1) | L(1, 1) | ... | |
| L(0, 0) | L(1, 0) | ... | L (H-1, 0) |
| | | | |
| R-Image Data Area 1902 | | | |
| R(0, V-1) | R(1, V-1) | ... | R(H-1, V-1) |
| ... | ... | ... | ... |
| R(0, 1) | R(1, 1) | ... | |
| R(0, 0) | R(1, 0) | ... | R(H-1, 0) |
| | | | |
| Blend Pattern 501 | | | |
| P(0) | P(1) | ... | P(H-1) |
| | | | |
| Completed Image Data Area 1904 | | | |
| Q(0, V-1) | Q(1, V-1) | ... | Q(H-1, V-1) |
| ... | ... | ... | ... |
| Q(0, 1) | Q(1, 1) | ... | |
| Q(0, 0) | Q(1, 0) | ... | Q (H-1, 0) |

In the memory 130 are reserved an L-image data area 1901 storing L-image data 901, an R-image data area 1902 storing R-image data 911, and a completed image data area 1904 storing completed image data 903.

The image blending unit refers to the storage position of L-image data 901 written in the row ID=2 of the shooting database, to read out the L-image data 901 for writing to the L-image data area 1901 of the memory 130 and refers to the storage position of R-image data 911 written in the row ID=3 of the shooting database, to read out the R-image data 911 for writing to the R-image data area 1902 of the memory 130.

For all of the pixels of the L-image data area 1901 and the R-image data area 1902, the image blending unit 126 performs an operation expressed by the following equation to generate completed data.

$$(Eq.11) \quad Q(x,y)=(P(x) \cdot L(x,y)+(255-P(x)) \cdot R(x,y))/255$$

where x is a horizontal coordinate value of image data, y is a vertical coordinate value of the image data, L(x,y) is a value of the L-image data area 1901 at the coordinate values x and y, R(x, y) is a value of the R-image data area 1902 at the coordinate values x and y, P(x) is a value of the blend pattern at a horizontal coordinate value x, and Q(x,y) is a value of the completed image data area 1904 at the coordinate values x and y. As used herein, the value of the image data area is assumed to be a value such as a luminance value representing the luminance or a lightness value representing the lightness. Although Equation 11 uses the value 255 based on the assumption that each pixel has 8 bits as already described for Equation 9, this is not limitative but the value of 1 is available if the hierarchical value is not taken into consideration. In such a case, Equation 11 results in $Q(x,y)=(P(x) \cdot L(x,y)+(1-P(x)) \cdot R(x,y))$.

The contents of processing will be specifically described referring to Table 2. First, for the coordinate at the left bottom corner, Q(0,0) is obtained from the following equation.

$$(Eq.21)\quad Q(0,0)=(P(0) \cdot L(0,0)+(255-P(0)) \cdot R(0,0))/255$$

Then, for the next coordinate on the right side, Q(1,0) is obtained from the following equation.

$$(Eq.22)\quad Q(1,0)=(P(1) \cdot L(1,0)+(255-P(1)) \cdot R(1,0))/255$$

Similar processing is repeated while shifting the coordinate rightward. When the rightmost coordinate is reached, Q(0,1) is obtained for the leftmost coordinates positioned one above from the following equation.

$$(Eq.23)\quad Q(0,1)=(P(0) \cdot L(0,1)+(255-P(0)) \cdot R(0,1))/255$$

Similar processing is repeated to find Q(x,y) for all the coordinate values, whereby the completed image data 903 is generated in the completed image data area 1904.

The thus generated completed image data 903 is stored in the storage unit 121 and the storage position of the completed image data is recorded in a row ID=4 of the shooting database 135.

Performance of the general control unit 127 will then be described.

The shooting conditions generating unit 123 is first operated in response to a shooting start trigger from the user received by the input unit. The shooting control unit 124 is operated after the completion of the actions of the shooting conditions generating unit 123.

The blend pattern generating unit 125 is operated after the completion of the actions of the shooting control unit 124. The image blending unit is activated after the completion of the actions of the blend pattern generating unit 125.

After the termination of the operations of the image blending unit, a shooting completion message is displayed for the user via the output unit 133, to inform the user of the completion to bring the actions of the general control unit to an end.

Description will be made of regular reflection suppressing effect that is achieved by the use of this shooting system. The shot image data obtained through the shooting under the disposition conditions of Fig. 3 results in Fig. 4 by the actions of the shooting control unit 124. Although in this embodiment the images are shot and acquired by the shooting control unit 124, this is not limitative but the input unit may receive the L-image data 901 and the R-image data 911.

An image of an area corresponding to the shooting range W is shot as the L-image data 901. From the corresponding relationship to Fig. 3, the x-coordinate values a to d represent a portion where the subject appears. At the position of the x-coordinate value b of the L-image data 901 there exists a lighting reflection portion due to regular reflection.

Similarly, an image of an area corresponding to the shooting range W is shot as the R-image data 911. From the corresponding relationship to Fig. 3, the x-coordinate values a to d represent a portion where the subject appears. At the position of the x-coordinate value c of the R-image data 911 there exists a lighting reflection portion due to regular reflection.

In this state, the general control unit 127 operates the image blending unit to generate the completed image data 903. In the actual shooting, the light source has a certain width due to the presence of a diffusion plate, etc. and the subject also has a minute unevenness. Accordingly, the lighting reflection area appears on the screen with a certain width around each of the coordinate values b and c, as shown in Fig. 4.

When the x-coordinate is from 0 to b, the completed image data 903 has the blend pattern of 0 and is therefore equal to the R-image data 911. When the x-coordinate is from b to c, the blend pattern gradually varies up to 255, so that the image gradually changes from the R-image data 911 to the L-image data. When the x-coordinate is from c to H-1, the blend pattern is 0 and therefore the image becomes equal to the L-image data.

Therefore, since the value of the blend pattern is near 0 in the vicinity of the coordinate value b, the R-image data 911 without reflection is combined with the L-image data 901 in a larger proportion than the L-image data 901, whereas since the value of the blend pattern is near 255 in the vicinity of the coordinate value c, the L-image data 901 without reflection is combined with the R-image data 911 in a larger proportion than the R-image data 911.

By virtue of the blend pattern and the actions of the image blending unit in this manner, image data without reflection is predominantly blended around the areas where reflection occurs, thus advantageously enabling the reflections to be suppressed.

According to this embodiment as set forth hereinabove, there can be obtained a shot image easily suppressing the lighting reflections without any need to adjust the position and direction of the lighting even when the subject is glossy.

Second Embodiment

In this embodiment, an example of a shooting system is described that is capable of not only obtaining shot images suppressing reflections caused by regular reflection but also generating images bearing the beauty of the subject more faithfully.

In this second embodiment, the blend pattern generating unit 125 generates three different blend patterns depending on the contents of shooting conditions data and stores them in the storage unit 121.

The image blending unit 126 uses the three different blend patterns to combine the L-image data 901 and the R-image data 911, to consequently generate three different completed image data for the storage in the storage unit 121.

<Processing Procedure Example>

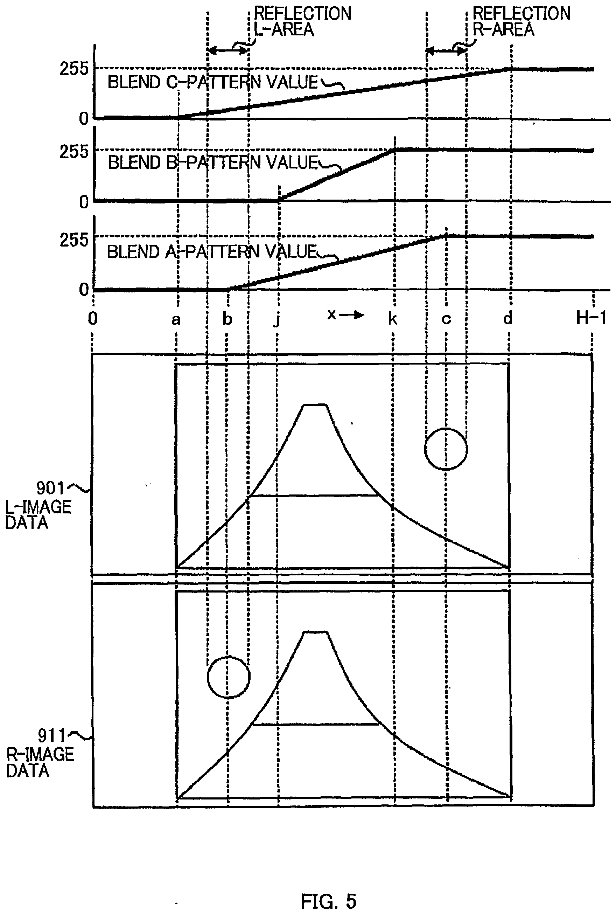

An execution procedure of a shooting method of this embodiment will be described with reference to the drawings. Referring to Figs. 3 and 5, performance of the blend pattern generating unit 125 will be described.

First, similar to the case of the first embodiment, the blend pattern generating unit 125 obtains a horizontal pixel count H of image data. The blend pattern generating unit 125 then finds a coordinate value b corresponding to a position where the L-lighting undergoes regular reflection and a coordinate value c corresponding to a position where the R-lighting undergoes regular reflection.

The blend pattern generating unit 125 generates a blend A-pattern to store it in the storage unit. As used herein, the blend A-pattern refers to the blend pattern of the first embodiment, which will not again be described in detail.

The blend pattern generating unit then generates a blend B-pattern using the x-coordinate values b and c as follows. With j=b+(c-b)/4 and k=c-(c-b)/4, all the values are set to 0 when $0 \leqq x \leqq j$. Since the blend pattern value gradually increases from 0 up to 255 when j<x<k, the value of z expressed by Equation 12 is set. Note that 0 is set if z<0 and 255 is set if z>255. All the values are set to 255 when $k \leqq x \leqq H-1$.

$$(Eq.12) \quad z=255 \cdot (x-j)/(k-j)$$

By setting in this manner, the contents of the blend B-pattern result in values indicated by graphs of Fig. 5. When generating the blend B-pattern, the blend pattern value in j<x<k may be set so as to increase according as x varies from j to k and the method thereof is not limited to the method shown in this embodiment. For example, Equation 13 may be employed.

$$(Eq.13) \quad z=255 \cdot (1-\cos(\pi(x-j)/(k-j)))/2$$

Use of Equation 13 leads to an effect that the changes in the blend boundaries (near j and k) become smoother than the case of using Equation 12.

The blend pattern generating unit 125 then stores the generated blend B-pattern in the storage unit.

The blend pattern generating unit 125 then finds an x-coordinate value a of the blend pattern corresponding to the left end of the subject and an x-coordinate value d of the blend pattern corresponding to the right end of the subject, from Equations 14 and 15.

$$(Eq.14) \quad a=(W-P)/2 \cdot (H/W) \quad (where \ round \ up \ the \ first$$

$$decimal \ place)$$

$$(Eq.15) \quad d=(W+P)/2 \cdot (H/W) \quad (where \ round \ down \ the \ first$$

$$decimal \ place)$$

The blend pattern generating unit generates a blend C-pattern as follows by making use of the x-coordinate values a and d. All the values are set to 0 when $0 \leqq x \leqq a$. Since the blend pattern value gradually increases from 0 up to 255 when $a < x < d$, the value of z expressed by Equation 16 is set. Note that 0 is set if $z < 0$ and 255 is set if $z > 255$.

$$(Eq.16) \quad z=255 \cdot (x-a)/(d-a)$$

All the values are set to 255 when $d \leqq x \leqq H-1$. By setting in this manner, the contents of the blend pattern result in values indicated by graphs of Fig. 5. When generating the blend pattern, the blend pattern value in $a < x < d$ may be set so as to increase according as x varies from a to d and the method thereof is not limited to the method shown in this embodiment. For example, Equation 17 may be employed.

$$(Eq.17) \quad z=255 \cdot (1-cos(\pi(x-a)/(d-a)))/2$$

Use of Equation 17 leads to an effect that the changes in the blend boundaries (near a and d) become smoother than the case of using Equation 16.

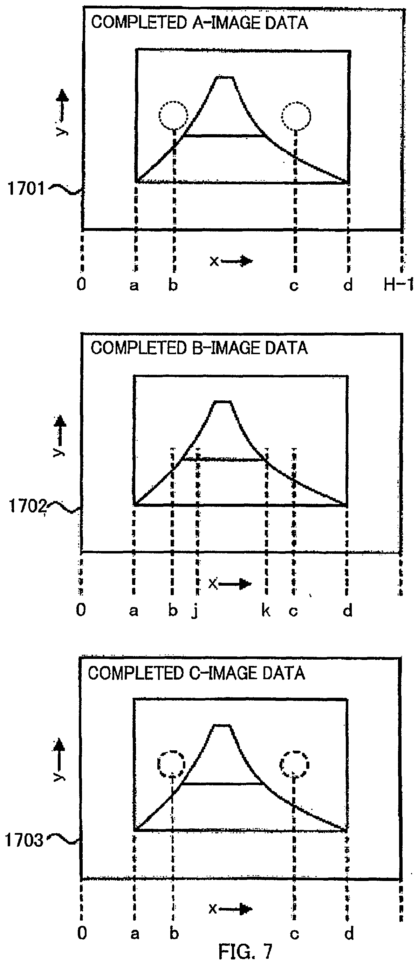

The blend pattern generating unit 125 then stores the generated blend C-pattern in the storage unit. Performance of the image blending unit 126 will then be described. Figs. 4 and 7 depict the contents of image data. Table 3 shows the corresponding relationship between the array and the values of pixels of image data obtained as a result of combining through the blend patterns written to the memory 130.

[Table 3]

| Completed A-Image Data Area 2001 | | | |
| --- | --- | --- | --- |
| Qa(0, V-1) | Qa(1, V-1) | ... | Qa(H-1, V-1) |
| ... | ... | ... | ... |
| Qa(0, 1) | Qa (1, 1) | ... | |
| Qa(0, 0) | Qa(1, 0) | ... | Qa(H-1, 0) |
| | | | |
| Completed B-Image Data Area 2002 | | | |
| Qb(0, V-1) | Qb(1, V-1) | ... | Qb(H-1, V-1) |
| ... | ... | ... | ... |
| Qb(0, 1) | Qb(1, 1) | ... | |
| Qb(0, 0) | Qb(1, 0) | ... | Qb(H-1, 0) |
| | | | |
| Completed C-Image Data Area 2003 | | | |
| Qc(0, V-1) | Qc(1, V-1) | ... | Qc(H-1, V-1) |
| ... | ... | ... | ... |
| Qc(0, 1) | Qc(1, 1) | ... | |
| Qc(0, 0) | Qc(1, 0) | ... | Qc(H-1, 0) |

The image blending unit 126 reserves in the memory 130 the L-image data area 1901 storing the L-image data 901, the R-image data area 1902 storing the R-image data 911, a completed image data area 2001 storing completed A-image data 1701, a completed B-image data area 2002 storing completed B-image data 1702, and a completed C-image data area 2003 storing completed C-image data 1703.

The image blending unit refers to the storage position of L-image data 901 written in the row ID=2 of the shooting database, to read out the L-image data 901 for writing to the L-image data area 1901 of the memory 130 and refers to the storage position of R-image data 911 written in the row ID=3 of the shooting database, to read out the R-image data 911 for writing to the R-image data area 1902 of the memory 130.

For all of the pixels of the L-image data area 1901 and the R-image data area 1902, the image blending unit 126 performs operations expressed by equations 18, 19, and 20 to generate completed A-image data, completed B-image data, and completed C-image data.

$$(Eq.18) \quad Qa(x,y) = (Pa(x) \cdot L(x,y) + (255 - Pa(x)) \cdot R(x,y))/255$$

$$(Eq.19) \quad Qb(x,y) = (Pb(x) \cdot L(x,y) + (255 - Pb(x)) \cdot R(x,y))/255$$

$$(Eq.20) \quad Qc(x,y) = (Pc(x) \cdot L(x,y) + (255 - Pc(x)) \cdot R(x,y))/255$$

where x is a horizontal coordinate value of image data, y is a vertical coordinate value of the image data, L(x,y) is a value of the L-image data area 1901 at the coordinate values x and y, R(x, y) is a value of the R-image data area 1902 at the coordinate values x and y, Pa(x) is a value of the blend A-pattern at the horizontal coordinate value x, Pb(x) is a value of the blend B-pattern at the horizontal coordinate value x, Pc(x) is a value of the blend C-pattern at the horizontal coordinate value x, Qa(x,y) is a value of the completed A-image data area 2001 at the coordinate values x and y, Qb(x,y) is a value of the completed B-image data area 2002 at the coordinate values x and y, and Qc(x,y) is a value of the completed C-image data area 2003 at the coordinate values x and y.

The contents of processing will be specifically described referring to Tables 2 and 3. First, for the coordinate at the left bottom corner, Qa(0,0), Qb(0,0), and Qc(0,0) are obtained from the following equations.

$$(Eq.24) \quad Qa(0,0) = (Pa(0) \cdot L(0,0) + (255 - Pa(0)) \cdot R(0,0))/255$$

$$(Eq.25) \quad Qb(0,0) = (Pb(0) \cdot L(0,0) + (255 - Pb(0)) \cdot R(0,0))/255$$

$$(Eq.26) \quad Qc(0,0) = (Pc(0) \cdot L(0,0) + (255 - Pc(0)) \cdot R(0,0))/255$$

Then, for the next coordinate on the right side, Qa(1,0), Qb(1,0), and Qc(1,0) are obtained from the following equations.

$$(Eq.27) \quad Qa(1,0) = (Pa(1) \cdot L(1,0) + (255 - Pa(1)) \cdot R(1,0))/255$$

$$(Eq.28) \quad Qb(1,0) = (Pb(1) \cdot L(1,0) + (255 - Pb(1)) \cdot R(1,0))/255$$

$$(Eq.29) \quad Qc(1,0) = (Pc(1) \cdot L(1,0) + (255 - Pc(1)) \cdot R(1,0))/255$$

Similar processing is repeated while shifting the coordinate rightward. When the rightmost coordinate is reached, Qa(0,1), Qb(0,1), and Qc(0,1) are obtained for the leftmost coordinates positioned one above from the following equations.

$$(Eq.30) \quad Qa(0,1) = (Pa(0) \cdot L(0,1) + (255 - Pa(0)) \cdot R(0,1))/255$$

$$(Eq.31) \quad Qb(0,1) = (Pb(0) \cdot L(0,1) + (255 - Pb(0)) \cdot R(0,1))/255$$

$$(Eq.32) \quad Qc(0,1)=(Pc(0) \cdot L(0,1)+(255-Pc(0)) \cdot R(0,1))/255$$

Similar processing is repeated to find Qa(x,y), Qb(x,y), and Qc(x,y) for all the coordinate values, whereby the completed A-image data 1701, the completed B-image data 1702, and the completed C-image data 1703 are generated in the completed image-A data area 2001, the completed image-B data area 2002, and the completed image-C data area 2003, respectively.

The actions of the image blending unit 126 generate three different completed image data through combining the L-image data 901 and the R-image data 911 with weights using three different blend patterns for each pixel.

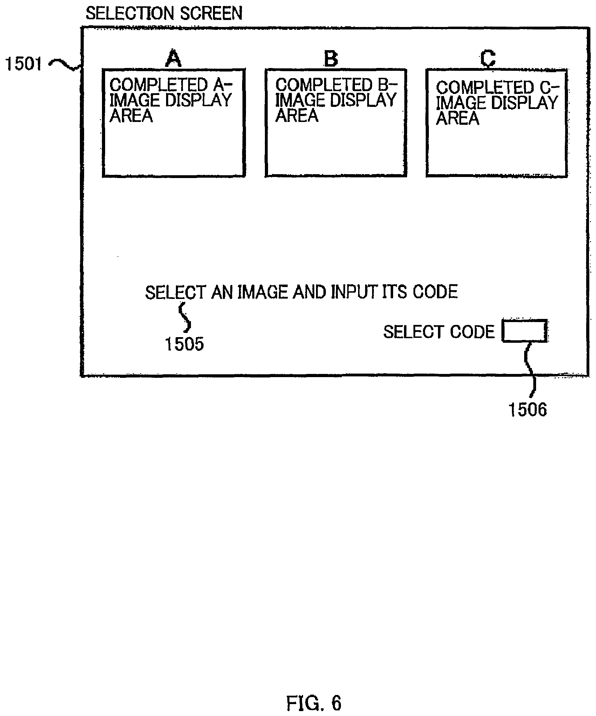

Performance of an image selecting unit will then be described. The image selecting unit is stored in the storage unit 121 as one element of the program 122 implementing the functions of the computer 134. Fig. 6 shows a layout of a selection screen displayed on the screen by the image selecting unit via the output unit. Fig. 7 shows the contents of the image data.

The image selecting unit reads out the completed A-image data 1701, the completed B-image data 1702, and the completed C-image data 1703 from the completed image-A data area 2001, the completed image-B data area 2002, and the completed image-C data area 2003, respectively, to display the respective images at predetermined positions on the selection screen of Fig. 6 via the output unit 133.

The image selecting unit displays on the selection screen a selection request message 1505 to select one from among three images and accepts a select code from a selection input area 1506 via the input unit.

If the select code is "A", the image selecting unit stores the completed A-image data 1701 in the completed A-image data area 2001 into the storage unit 121 and records the completed A-image data storage position in the row ID=4 of the shooting database 135.

If the select code is "B", the image selecting unit stores the completed B-image data 1702 in the completed B-image data area 2002 into the storage unit 121 and records the completed B-image data storage position in the row ID=4 of the shooting database 135.

If the select code is "C", the image selecting unit stores the completed C-image data 1703 in the completed C-image data area 2003 into the storage unit 121 and records the completed C-image data storage position in the row ID=4 of the shooting database 135.

If the select code is other than "A", "B", and "C", the image selecting unit ignores the input to again receive a select code.

As a result of the above actions, a completed image selected by the user is stored in the storage unit 121.

Performance of the general control unit 127 will then be described.

The shooting conditions generating unit 123 is first operated in response to a shooting start trigger from the user received by the input unit 132.

The shooting control unit 124 is operated after the completion of the actions of the shooting conditions generating unit 123.

The blend pattern generating unit 125 is operated after the completion of the actions of the shooting control unit 124.

The image blending unit 126 is activated after the completion of the actions of the blend pattern generating unit 125.

The image selecting unit is activated after the completion of the actions of the image blending unit 126.

After the completion of the actions of the image selecting unit, a shooting completion message is displayed for the user via the output unit 133, to inform the user of the completion to bring the actions of the general control unit 127 to an end.

Effects achieved by the use of the shooting system of this embodiment will be described. Shot image data obtained by shooting in the disposition conditions of Fig. 3 result in the L-image data 901 and the R-image data 911 of Fig. 4 already described, through the actions of the shooting control unit 124.

In this state, the general control unit operates the image blending unit to allow the generation of the completed A-image data 1701, the completed B-image data 1702, and the completed C-image data 1703 as shown in Fig. 7.

In the actual shooting, the light source has a certain width due to the presence of the diffusion plate, etc. and the subject also has a minute unevenness. Accordingly, the lighting reflection area appears on the screen with a certain width around each of the coordinate values b and c, as shown in Fig. 4.

When the x-coordinate is from 0 to b, the completed A-image data 1701 has the blend pattern of 0 and is therefore equal to the R-image data 911. When the x-coordinate is from b to c, the blend pattern gradually varies up to 255, so that the image gradually changes from the R-image data 911 to the L-image data. When the x-coordinate is from c to H-1, the blend pattern is 0 and therefore the image becomes equal to the L-image data.

When the x-coordinate is from 0 to j, the completed B-image data 1702 has the blend pattern of 0 and is therefore equal to the R-image data 911. When the x-coordinate is from j to k, the blend pattern gradually varies up to 255, so that the image gradually changes from the R-image data 911 to the L-image data. When the x-coordinate is from k to H-1, the blend pattern is 0 and therefore the image becomes equal to the L-image data.

When the x-coordinate is from 0 to a, the completed C-image data 1703 has the blend pattern of 0 and is therefore equal to the R-image data 911. When the x-coordinate is from a to d, the blend pattern gradually varies up to 255, so that the image gradually changes from the R-image data 911 to the L-image data. When the x-coordinate is from d to H-1, the blend pattern is 0 and therefore the image becomes equal to the L-image data.

In the vicinity of the coordinate value b, the R-image data 911 has a reflection but the L-image data 901 has no reflection. On the contrary, in the vicinity of the coordinate value c, the L-image data 901 has a reflection but the R-image data 911 has no reflection. Therefore, the reflection near the coordinate value b can be suppressed to a greater extent according as the blend pattern near the coordinate value b approaches 0, whereas the reflection near the coordinate value c can be suppressed to a greater extent according as the blend pattern near the coordinate value c value approaches 255.

Since the three different blend patterns are formed as shown in Fig. 5, a stronger reflection suppressing effect is imparted to the completed B-image data 1702, the completed A-image data 1701, and the completed C-image data 1703 in the mentioned order (see Fig. 7). In particular, the completed B-image data 1702 results in an image thoroughly suppressing the reflection as long as the reflection area is absent between the coordinate values j and k.

The completed A-image data 1701, the completed B-image data 1702, and the completed C-image data 1703 are displayed in a column by the action of the image selecting unit. In the case of a painting using a glossy material such as gold, it is important "how it looks" of the portion of reflection due to lighting in order to express the texture and beauty of the subject. From such a viewpoint, the user selects an image that is most suitable for a shot image. Since the image selecting unit records the storage position of an image selected by the user in the row ID=4 of the shooting database 135, the user acquires an image lying at the storage position stored in the row ID=4 of the shooting database 135, thereby enabling an image most suitable for a shot image to be obtained.

According to this embodiment as set forth hereinabove, there can not only be obtained a shot image easily suppressing the lighting reflections without any need to adjust the position and direction of the lighting even when the subject is glossy, but also can be generated an image having a higher regular reflection suppressing effect than the first embodiment. It also enables the generation of an image bearing the beauty of the subject more faithfully.

Although three different blend patterns are provided in this embodiment, similar shooting system may be configured by using two different or four or more different blend patterns.

EXPLANATIONS OF SIGNS

101:subject, 102:L-lighting, 103:R-lighting, 104:light source, 105:light source control unit, 106:communication unit, 111:camera, 112:shooting unit, 113:shooting control unit, 114:communication unit, 121:storage unit, 122:program, 123:shooting conditions generating unit, 124:shooting control unit, 125:blend pattern generating unit, 126:image blending unit, 127:general control unit, 128:bus, 129:control unit, 130:memory, 131:communication unit, 132:input unit, 133:output unit, 401:image pickup device, 402:L-lighting position, 403:R-lighting position, 404:camera position, 405:shooting conditions data, 501:blend pattern, 502:shot image data, 901:L-image data, 903:completed image data, 911:R-image data, 1501:selection screen, 1505:selection request message, 1506:selection input area, 1701:completed A-image data, 1702:completed B-image data, 1703:completed C-image data, 1901: L-image data area, 1902:R-image data area, 1903:completed image data area, 2001:completed A-image data area, 2002:completed A-image data area, 2003:completed A-image data area

**Claims**

1. An automatic image combining apparatus comprising:

   an input unit arranged

      to receive a first image obtained by shooting a subject (101) with light applied thereto, from a first lighting device, in a first oblique direction with respect to the subject,
      to receive a second image obtained by shooting the subject with light applied thereto, from a second lighting device, in a second oblique direction with respect to the subject, the second oblique direction being opposite to the first oblique direction with respect to the subject, and
      to accept information on the subject and a shooting device;

a blend pattern generating unit (125) arranged to calculate and find, based on the accepted information, a ratio Z for determining a proportion in combining of the first image and the second image for each pixel whereby the blend pattern generating unit calculates a point b at which an angle of incidence of light from the first lighting device to the subject is equal to an angle of reflection of light from the subject to the shooting device and a point c at which an angle of incidence of light from the second lighting device to the subject is equal to an angle of reflection of light from the subject to the shooting device, b and c being abscissa coordinate values on the image plane and the ratio Z allowing a gradual transition from the first image to the second image from b toward c;

an image blending unit arranged to obtain (126) a third image combined by adding the first image multiplied by the ratio Z and the second image multiplied by 1-Z for each pixel; and

an output unit arranged to output the third image.

2. The automatic image combining apparatus of claim 1, wherein
the blend pattern generating unit (125) is arranged to find the ratio Z allowing $Z=(x-b)/(c-b)$ at a horizontal position x of the third image.

3. The automatic image combining apparatus of claim 1, wherein
the blend pattern generating unit (125) is arranged to find the ratio Z allowing $Z=(1-\cos(\pi(x-b)/(c-b)))/2$ at a horizontal position x of the third image.

4. The automatic image combining apparatus of any one of claims 1 to 3, wherein
the accepted information is information of a shooting range W of the subject, a focal length f, a width s of an image pickup device, a horizontal distance Lx from the center of the subject to the first lighting device, a vertical distance Ly from the subject to the first lighting device, a horizontal distance Rx from the center of the subject to the second lighting device, and a vertical distance Ry from the subject to the second lighting device, and wherein
the blend pattern generating unit (125) is arranged to find a pixel count H of an image within the shooting range W, to figure out a shooting distance G from $G=W \times f/s+f$, to figure out the b from $b=(W/2-G \times (Lx/(G+Ly))) \times (H/W)$, and to figure out the c from $c=(W/2+G \times (Rx/(G+Ry))) \times (H/W)$.

5. A reflection-controlled image apparatus of any one of claims 1 to 3, wherein
the image blending unit (126) is arranged to perform the combining based on a luminance value of each of pixels of the first shot image and the second shot image.

6. A reflection-controlled image apparatus of any one of claims 1 to 4, wherein
the image blending unit (126) is arranged to perform the combining using a blend pattern specified from among a plurality of the blend patterns by a user input.

7. An automatic image combining method comprising:

receiving a first image obtained by shooting a subject (101) with light applied thereto, from a first lighting device, in a first oblique direction with respect to the subject,
receiving a second image obtained by shooting the subject with light applied thereto, from a second lighting device in a second oblique direction with respect to the subject, the second oblique direction being opposite to the first oblique direction with respect to the subject, and
accepting information on the subject and a shooting device;
calculating and finding, based on the accepted information, a ratio Z for determining a proportion in combining of the first image and the second image for each pixel by calculating a point b at which an angle of incidence of light from the first lighting device to the subject is equal to an angle of reflection of light from the subject to the shooting device and a point c at which an angle of incidence of light from the second lighting device to the subject is equal to an angle of reflection of light from the subject to the shooting device, b and c being abscissa coordinate values on the image plane and the ratio Z allowing a gradual transition from the first image to the second image from b toward c;
obtaining a third image combined by adding the first image multiplied by the ratio Z and the second image multiplied by 1-Z for each pixel; and
outputting the third image.

8. A computer program (122) adapted to perform all the steps of the method of claim 7 when said program is run on a computer (134).

**9.** A computer program as claimed in claim 8 embodied on a computer readable storage unit.

**Patentansprüche**

**1.** Vorrichtung für automatische Bildzusammensetzung, umfassend:

eine Eingabeeinheit, die dazu ausgelegt ist, ein erstes Bild zu empfangen, welches durch die Aufnahme eines Gegenstands (101) mit von einer ersten Beleuchtungsvorrichtung in einer ersten schrägen Richtung bezogen auf den Gegenstand aufgestrahlter Beleuchtung gewonnen wurde,
ein zweites Bild zu empfangen, welches durch Aufnahme des Gegenstands mit von einer zweiten Beleuchtungsvorrichtung in einer zweiten schrägen Richtung bezogen auf den Gegenstand aufgestrahlter Beleuchtung gewonnen wurde, wobei die zweite schräge Richtung bezogen auf den Gegenstand der ersten schrägen Richtung gegenüberliegt, und
Informationen über den Gegenstand und eine Aufnahmevorrichtung anzunehmen;
eine Mischungsmustererzeugungseinheit (125), die dazu ausgelegt ist, abhängig von der angenommenen Information ein Verhältnis Z zum Ermitteln eines Verhältnisses bei der Kombination des ersten Bilds und des zweiten Bilds für jedes Pixel zu berechnen und zu finden, wobei die Mischmustererzeugungseinheit einen Punkt b berechnet, in welchem ein Einfallswinkel von Licht aus der ersten Beleuchtungsvorrichtung auf den Gegenstand gleich einem Reflexionswinkel von Licht von dem Gegenstand zu der Aufnahmevorrichtung ist und einen Punkt c berechnet, in welchem ein Einfallswinkel des Lichts von der zweiten Beleuchtungsvorrichtung auf den Gegenstand gleich einem Reflexionswinkel von Licht von dem Gegenstand zu der Aufnahmevorrichtung ist, wobei b und c Abszissen-Koordinatenwerte auf der Bildebene sind, und das Verhältnis Z, welches einen schrittweisen Übergang von dem ersten Bild zu dem zweiten Bild von b nach c ermöglicht;
eine Bildmischeinheit (126), die dazu ausgelegt ist, ein drittes Bild durch Kombination zu erhalten, indem das erste mit dem Verhältnis Z multiplizierte Bild und das zweite mit 1-Z multiplizierte Bild für jedes Pixel addiert werden; und
eine Ausgabeeinheit, die dazu ausgelegt ist, das dritte Bild auszugeben.

**2.** Vorrichtung für automatische Bildzusammensetzung nach Anspruch 1, wobei
die Mischmustererzeugungseinheit (125) dazu ausgelegt ist, das Verhältnis Z gemäß Z = (x-b)/(c-b) für eine horizontale Position x des dritten Bilds zu finden.

**3.** Vorrichtung für automatische Bildzusammensetzung nach Anspruch 1, wobei
die Mischmustererzeugungseinheit (125) dazu ausgelegt ist, das Verhältnis Z gemäß Z = (1-cos(ð(x-b)/(c-b)))/2 für eine horizontale Position x des dritten Bilds zu finden.

**4.** Vorrichtung für automatische Bildzusammensetzung nach einem der Ansprüche 1 bis 3, wobei
die angenommene Information Information über einen Aufnahmebereich W des Gegenstands, eine Brennweite f, eine Breite s einer Bildaufnahmevorrichtung, einen horizontalen Abstand Lx von dem Mittelpunkt des Gegenstands zu der ersten Beleuchtungsvorrichtung, einen vertikalen Abstand Ly zwischen dem Gegenstand und der ersten Beleuchtungsvorrichtung, einen horizontalen Abstand Rx zwischen dem Mittelpunkt des Gegenstands und der zweiten Beleuchtungsvorrichtung und einen vertikalen Abstand Ry zwischen dem Gegenstand und der zweiten Beleuchtungsvorrichtung ist und wobei
die Mischmustererzeugungseinheit (125) dazu ausgelegt ist, eine Pixelzahl H eines Bilds innerhalb des Aufnahmebereichs W zu ermitteln, um einen Aufnahmeabstand G aus G = W x f/s+f zu ermitteln, b aus b = (W/2-G x (Lx/(G+Ly))) x (H/W) zu ermitteln und c aus c = (W/2+G x (Rx/ (G+Ry))) x (H/W) zu ermitteln.

**5.** Reflexionsgesteuerte Bildvorrichtung nach einem der Ansprüche 1 bis 3, wobei
die Bildmischeinheit (126) dazu ausgelegt ist, die Zusammensetzung abhängig von einem Helligkeitswert der jeweiligen Pixel aus dem ersten aufgenommenen Bild und dem zweiten aufgenommenen Bild durchzuführen.

**6.** Reflexionsgesteuerte Bildvorrichtung nach einem der Ansprüche 1 bis 4, wobei
die Bildmischeinheit (126) dazu ausgelegt ist, die Zusammensetzung mithilfe eines aus einer Mehrzahl von Mischmustern aufgrund einer Benutzereingabe spezifizierten Mischmuster durchzuführen.

**7.** Automatisches Bildzusammensetzungsverfahren, umfassend:

Empfangen eines ersten Bilds, welches erhalten wird durch Aufnahme eines Gegenstands (101) mit von einer ersten Beleuchtungsvorrichtung in einer ersten schrägen Richtung bezogen auf den Gegenstand aufgestrahlter Beleuchtung,

Empfangen eines zweiten Bilds, welches erhalten wird durch Aufnehmen des Gegenstands mit aus einer zweiten Beleuchtungsvorrichtung in einer zweiten schrägen Richtung bezogen auf den Gegenstand aufgestrahlter Beleuchtung, wobei die zweite schräge Richtung bezogen auf den Gegenstand der ersten schrägen Richtung gegenüberliegt, und

Annehmen von Information über den Gegenstand und die Aufnahmevorrichtung;

Berechnen und Finden eines Verhältnisses Z zum Bestimmen eines Verhältnisses bei der Zusammensetzung des ersten Bilds und des zweiten Bilds abhängig von der angenommenen Information für jedes Pixel durch Berechnung eines Punkts b, in welchem der Einfallswinkel des Lichts aus der ersten Beleuchtungsvorrichtung auf den Gegenstand gleich einem Reflexionswinkel von Licht von dem Gegenstand zu der Aufnahmevorrichtung ist, sowie eines Punkts c, in welchem der Einfallswinkel von Licht aus der zweiten Beleuchtungsvorrichtung auf den Gegenstand gleich einem Reflexionswinkel von Licht von dem Gegenstand zu der Aufnahmevorrichtung ist, wobei b und c Abszissen-Koordinatenwerte in der Bildebene sind, und eines Verhältnisses Z, welches einen schrittweisen Übergang von dem ersten Bild zu dem zweiten Bild von b nach c ermöglicht;

Erhalten eines kombinierten dritten Bilds durch Addieren des ersten Bilds multipliziert mit dem Verhältnis Z und des zweiten Bilds multipliziert mit 1-Z für jedes Pixel; und

Ausgeben des dritten Bilds.

8. Computerprogramm (122), welches dazu ausgelegt ist, sämtliche Schritte des Verfahrens nach Anspruch 7 auszuführen, wenn das Programm auf einem Computer (134) läuft.

9. Computerprogramm nach Anspruch 8, verkörpert auf einer computerlesbaren Speichereinheit.

## Revendications

1. Appareil de combinaison automatique d'images comprenant :

une unité d'entrée agencée de manière à :

recevoir une première image obtenue en photographiant un sujet (101) avec de la lumière qui lui est appliquée, à partir d'un premier dispositif d'éclairage, dans une première direction oblique par rapport au sujet ;

recevoir une deuxième image obtenue en photographiant le sujet avec de la lumière qui lui est appliquée, à partir d'un second dispositif d'éclairage, dans une seconde direction oblique par rapport au sujet, la seconde direction oblique étant opposée à la première direction oblique par rapport au sujet ; et

accepter des informations sur le sujet et un dispositif de prise de vue ;

une unité de génération de motifs de mélange (125) agencée de manière à calculer et à trouver, sur la base des informations acceptées, un rapport Z pour déterminer une proportion dans la combinaison de la première image et de la deuxième image pour chaque pixel, moyennant quoi l'unité de génération de motifs de mélange calcule un point b auquel un angle d'incidence de la lumière, du premier dispositif d'éclairage au sujet, est égal à un angle de réflexion de la lumière, du sujet au dispositif de prise de vue, et un point c auquel un angle d'incidence de la lumière, du second dispositif d'éclairage au sujet, est égal à un angle de réflexion de la lumière, du sujet au dispositif de prise de vue, les points b et c étant des valeurs de coordonnées en abscisse sur le plan d'image, et le rapport Z permettant une transition graduelle de la première image à la deuxième image, du point b vers le point c ;

une unité de mélange d'images agencée de manière à obtenir (126) une troisième image combinée en additionnant la première image multipliée par le rapport Z et la deuxième image multipliée par 1-Z pour chaque pixel ; et

une unité de sortie agencée de manière à délivrer en sortie la troisième image.

2. Appareil de combinaison automatique d'images selon la revendication 1, dans lequel
l'unité de génération de motifs de mélange (125) est agencée de manière à trouver le rapport Z autorisant l'équation $Z = (x - b) / (c - b)$ dans une position horizontale x de la troisième image.

3. Appareil de combinaison automatique d'images selon la revendication 1, dans lequel
l'unité de génération de motifs de mélange (125) est agencée de manière à trouver le rapport Z autorisant l'équation
$Z = (1 - \cos(\pi (x - b) / (c - b))) / 2$ à une position horizontale x de la troisième image.

4. Appareil de combinaison automatique d'images selon l'une quelconque des revendications 1 à 3, dans lequel :

   les informations acceptées sont des informations d'une plage de prise de vue W du sujet, d'une longueur focale f, d'une largeur s d'un dispositif de capture d'image, d'une distance horizontale Lx du centre du sujet au premier dispositif d'éclairage, d'une distance verticale Ly du sujet au premier dispositif d'éclairage, d'une distance horizontale Rx du centre du sujet au second dispositif d'éclairage, et d'une distance verticale Ry du sujet au second dispositif d'éclairage, et dans lequel
   l'unité de génération de motifs de mélange (125) est agencée de manière à trouver un nombre de pixels H d'une image dans la plage de prise de vue W, à déterminer une distance de prise de vue G à partir de l'équation $G = W \times f / s + f$, à déterminer le point b à partir de l'équation $b = (W / 2 - G \times (Lx / (G + Ly))) \times (H / W)$, et à déterminer le point c à partir de l'équation $c = (W / 2 + G \times (Rx / (G + Ry))) \times (H / W)$.

5. Appareil d'image à réflexion commandée selon l'une quelconque des revendications 1 à 3, dans lequel
l'unité de mélange d'images (126) est agencée de manière à mettre en oeuvre la combinaison sur la base d'une valeur de luminance de chacun des pixels de la première image prise et de la seconde image prise.

6. Appareil d'image à réflexion commandée selon l'une quelconque des revendications 1 à 4, dans lequel
l'unité de mélange d'images (126) est agencée de manière à mettre en oeuvre la combinaison en utilisant un motif de mélange spécifié, parmi une pluralité de motifs de mélange, par une entrée d'utilisateur.

7. Procédé de combinaison automatique d'images comprenant :

   recevoir une première image obtenue en photographiant un sujet (101) avec de la lumière qui lui est appliquée, à partir d'un premier dispositif d'éclairage, dans une première direction oblique par rapport au sujet ;
   recevoir une deuxième image obtenue en photographiant le sujet avec de la lumière qui lui est appliquée, à partir d'un second dispositif d'éclairage, dans une seconde direction oblique par rapport au sujet, la seconde direction oblique étant opposée à la première direction oblique par rapport au sujet ; et
   accepter des informations sur le sujet et un dispositif de prise de vue ;
   calculer et trouver, sur la base des informations acceptées, un rapport Z pour déterminer une proportion dans la combinaison de la première image et de la deuxième image pour chaque pixel, en calculant un point b auquel un angle d'incidence de la lumière, du premier dispositif d'éclairage au sujet, est égal à un angle de réflexion de la lumière, du sujet au dispositif de prise de vue, et un point c auquel un angle d'incidence de la lumière, du second dispositif d'éclairage au sujet, est égal à un angle de réflexion de la lumière, du sujet au dispositif de prise de vue, les points b et c étant des valeurs de coordonnées en abscisse sur le plan d'image, et le rapport Z permettant une transition graduelle de la première image à la deuxième image, du point b vers le point c ;
   obtenir une troisième image combinée en additionnant la première image multipliée par le rapport Z et la deuxième image multipliée par 1-Z pour chaque pixel ; et
   délivrer en sortie la troisième image.

8. Programme informatique (122) apte à mettre en oeuvre la totalité des étapes du procédé selon la revendication 7, lorsque ledit programme est exécuté sur un ordinateur (134).

9. Programme informatique selon la revendication 8, intégré sur une unité de stockage lisible par ordinateur.

101

SUBJECT

L-LIGHTING

102

R-LIGHTING

LIGHT
SOURCE

104

LIGHT
SOURCE

103

104

105

LIGHT SOURCE
CONTROL UNIT

111

CAMERA

LIGHT SOURCE
CONTROL UNIT

105

106

COMMUNICATION
UNIT

SHOOTING
UNIT

COMMUNICATION
UNIT

106

112

SHOOTING
CONTROL UNIT

113

134

COMMUNICATION
UNIT

114

COMPUTER

STORAGE UNIT

122

PROGRAM

121

123

SHOOTING CONDITIONS
GENERATING UNIT

CONTROL UNIT

129

124

SHOOTING CONTROL UNIT

MEMORY

130

125

BLEND PATTERN
GENERATING UNIT

COMMUNICATION
UNIT

131

126

IMAGE BLENDING UNIT

INPUT UNIT

132

127

GENERAL CONTROL UNIT

OUTPUT UNIT

133

135

SHOOTING DATABASE

128

IMAGE DATA, ETC.

BUS

FIG. 1

401 — IMAGE PICKUP DEVICE

s

SHOOTING RANGE W

P

SUBJECT

101

Ly

Ry

G

402 L-LIGHTING POSITION

Lx

Rx

403 R-LIGHTING POSITION

404 CAMERA POSITION

SHOOTING CONDITIONS DATA

| SUBJECT SIZE P |
|---|
| SHOOTING DISTANCE G |
| L-LIGHTING POSITION Lx |
| L-LIGHTING POSITION Ly |
| R-LIGHTING POSITION Rx |
| R-LIGHTING POSITION Ry |
| SHOOTING RANGE W |

405

FIG. 2

FIG. 3

FIG. 4

FIG. 5

SELECTION SCREEN

1501 —

**A**

COMPLETED A-
IMAGE DISPLAY
AREA

**B**

COMPLETED B-
IMAGE DISPLAY
AREA

**C**

COMPLETED C-
IMAGE DISPLAY
AREA

SELECT AN IMAGE AND INPUT ITS CODE

1505

SELECT CODE [    ]

1506

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1256996 A
- US 20080246777 A
- US 20100047001 A
- JP 2007280102 A